# EUROPEAN PATENT APPLICATION

(11) **EP 3 011 819 A1**
(43) Date of publication of application: **27.04.2016**
(21) Application number: 15188877.3
(22) Date of filing: 08.10.2015
(51) Int. Cl.: A01D 34/416

(54) **A HEAD FOR EDGE TRIMMER WITH AERODYNAMIC SURFACE**

(30) Priority: 21.10.2014 IT MO20140295
(71) Applicant: Tecomec S.r.l., 42124 Reggio Emilia (IT)
(72) Inventor: LONGO, Salvatore, 42023 CADELBOSCO SOPRA (REGGIO EMILIA) (IT); CIGARINI, Enrico, 42123 REGGIO EMILIA (IT)
(74) Representative: Casadei, Giovanni

(57) **Abstract**

A head for edge trimmer comprising a casing (1), destined for containing at least a cutting wire reel and to be set in rotation about an axis of rotation (X), said casing exhibiting an outer surface (11) which is provided with a plurality of blind recesses (12) distributed in a pre-established manner on the outer surface (11) of the casing (1).

## Description

The invention relates to a head for an hedge trimmer.

The heads for hedge trimmer comprise a casing inside which there are housed a cutting wire reel and a mechanism which allows winding and/or unwinding thereof. At least two end portions of the cutting wire project out from the casing through corresponding side openings. During use, the wire portions projecting outwardly the casing, wear out progressively due to the fact that they come in contact with the plants to be cut. The worn portions can be replaced by partially unwinding the cutting wire reel via aforementioned mechanism which is comprised within the casing. In some hedge trimmer heads, once the reel is terminated, it is possible to replace it with a new one inside the casing or, in other types of heads, wrapping of the new reel can occur by means of aforementioned mechanism predisposed internally of the casing.

The casing is intended to be coupled to a drive shaft to be driven in rotation at a desired speed. Usually the speed of rotation of the casing is in the range of 10,000-12,000 rev./min. On the surface of the casing very intense air flows are thus generated which cause a considerable noise besides being a waste of energy.

The object of the present invention is to provide a head for a hedge trimmer which allows to overcome the drawbacks of the heads of the known type.

One advantage of the head according to the invention, is that, unlike the edge trimmer heads of the known type, the noise-making is considerably reduced during rotation thereof.

A further advantage of the inventive head is that energy wastage due to rotation thereof, is reduced.

Further characteristics and advantages of the present invention will better emerge from the detailed description that follows of a preferred embodiment of the invention, illustrated by way of non-limiting example in the accompanying figures wherein:

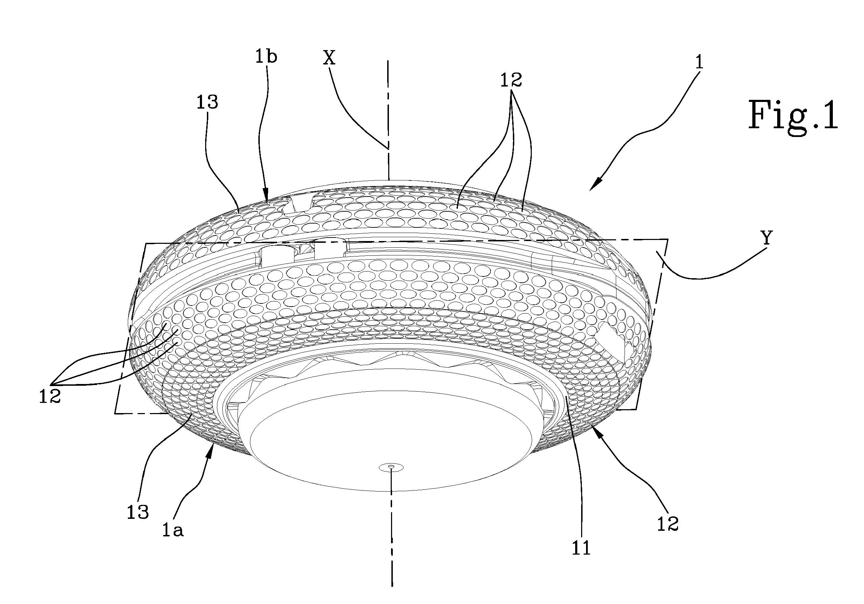

- figure 1 shows an axonometric view of the head according to the present invention, from a bottom view;

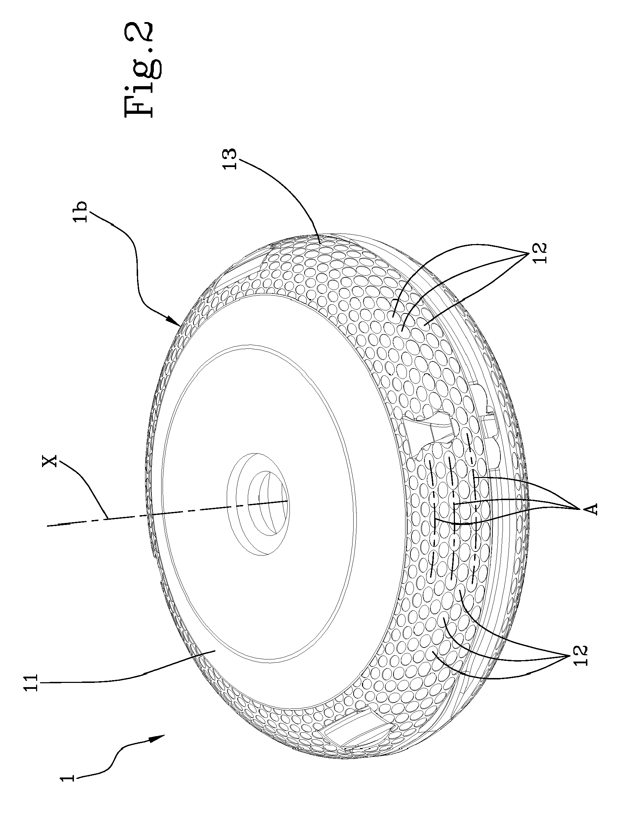

- figure 2 shows an axonometric view of the head according to the present invention, from a top view.

With reference to the above figures, the head according to the present invention comprises a casing (1), intended to contain at least one cutting wire reel and to be placed in rotation about an axis of rotation (X). In the illustrated embodiment, the casing (1) has an axial symmetry relative to the axis of rotation (X). Preferably, the casing (1) exhibits a discoidal shape with circular profile, concentric with the axis of rotation (X). In the preferred embodiment, the radially outermost portion of the casing 1 has a rounded profile, which concavity is facing the axis of rotation (X). Advantageously, the casing (1) can be divided into two half-shells (1 a, 1 b), coupled one to another relative to a median plane (Y) being perpendicular to the axis of rotation (X).

The casing (1) has an outer surface (11). The casing (1) further comprises a plurality of blind recesses (12), distributed in a pre-determined manner on the outer surface (11) of the casing (1).

The applicant has found that, owing to the presence of recesses (12) on the outer surface (11), the noise-making during rotation of the casing (1) is considerably reduced. The recesses (12) further allow to reduce the aerodynamic friction the casing (1) is subject to during rotation thereof. In a first embodiment, at least some of the recesses (12) have a circular edge. In an alternative embodiment at least some of the recesses (12) have an ovalized edge. In this alternative embodiment, the edge of the recesses (12) has a major axis (A), oriented perpendicularly to the axis of rotation (X). This allows to further increase the aerodynamic effect advantageously generated by the recesses (12).

In a possible further embodiment, the recesses (12) exhibit a polygonal-shaped edge. Further embodiments are possible, wherein there are combined recesses of some or all of the forms described.

Preferably, the recesses (12) have a rounded bottom. This allows to further increase the effects produced by the recesses (12).

In the embodiment shown, the recesses (12) are distributed on a portion (13) of the outer surface (11) which is concentric with the axis of rotation (X). Basically, such a portion (13) of the outer surface (11) has an annular shape which is concentric with the axis of rotation (X). Such a portion (13) of the outer surface (11) is also arranged at a determined distance from the axis of rotation (X), preferably in a radially outermost position relative to the axis of rotation (X). As shown in the figures, the recesses (12) are located preferably at a radially outer portion of the casing (1). This is because the greater the distance from the axis of rotation (X), the higher the peripheral speed of the casing (1), the greater the effect produced by the recesses (12). In other embodiments not illustrated, the recesses (12) can be distributed differently, up to cover almost completely the outer surface (11).

Advantageously, the casing (1) can be divided into a first half-shell (1a) and a second half-shell (1b), coupled one to another relative to a median plane (Y). The two half-shells (1a, 1b) can be coupled together in a removable manner, so as to allow access inside the head and to facilitate, by way of example, replacement of the cutting wire reel, or to resolve any jams. In this embodiment, the recesses (12) are distributed on the first and second half-shell (1a,1b) in a zone which is close to the median plane (Y). This zone is disposed at the greatest distance from the axis of rotation (X), and thus, as already mentioned, it benefits of the presence of the recesses (12). Preferably, the recesses (12) are distributed symmetrically with respect to the middle plane (Y), in order to make also the aerodynamic effect produced as a whole, symmetrical relative to the middle plane (Y).

## Claims

1. A head for edge trimmer comprising a casing (1), destined for containing at least a cutting wire reel and to be set in rotation about an axis of rotation (X), said casing exhibiting an outer surface (11), **characterized in that** it comprises a plurality of blind recesses (12) distributed in a pre-established manner on the outer surface (11) of the casing (1).

2. A head according to claim 1, wherein at least some of the recesses (12) have a circular edge.

3. A head according to claim 1, wherein at least some of the recesses (12) have an ovalized edge.

4. A head according to claim 3, wherein the edge of the recesses (12) has a major axis (A), oriented perpendicularly to the rotation axis (X).

5. A head according to claim 1, wherein at least some of the recesses (12) exhibit a rounded bottom.

6. A head according to claim 1, wherein the outer surface of the casing (1) has an axial symmetry with respect to the rotation axis (X) and the recesses (12) are distributed on a portion (13) of the outer surface (11) concentric with the rotation axis (X).

7. A head according to claim 1, wherein the outer surface of the casing (10) has an axial symmetry with respect to the rotation axis (X) and the recesses (12) are distributed on a portion (13) of the outer surface arranged at a determined distance from the rotation axis (X).

8. A head according to claim 1, wherein the casing (1) comprises a first half-shell (1a) and a second half-shell (1b) coupled to each other at a median plane (Y).

9. A head according to claim 8, wherein the recesses (12) are distributed on the first and second half-shell (1 a, 1 b) in an area next to the median plane (Y).

10. A head according to claim 8, wherein the recesses (12) are distributed symmetrically with respect to the median plane (Y).
